(19) **Europäisches Patentamt**
**European Patent Office**
**Office européen des brevets**

(11) **EP 1 266 446 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(21) Anmeldenummer: **00990763.5**

(22) Anmeldetag: **15.12.2000**

(51) Int Cl.:
***H02P 9/14*** *(2006.01)*

(86) Internationale Anmeldenummer:
**PCT/EP2000/012776**

(87) Internationale Veröffentlichungsnummer:
**WO 2001/069772 (20.09.2001 Gazette 2001/38)**

(54) **SYNCHRONGENERATOR**

**SYNCHRONOUS GENERATOR**

**GENERATEUR SYNCHRONE**

(84) Benannte Vertragsstaaten:
**AT BE CH CY DE DK ES FI FR GB GR IE IT LI LU MC NL PT SE TR**

(30) Priorität: **11.03.2000 DE 10011929**

(43) Veröffentlichungstag der Anmeldung:
**18.12.2002 Patentblatt 2002/51**

(73) Patentinhaber: **Wobben, Aloys**
**26607 Aurich (DE)**

(72) Erfinder: **Wobben, Aloys**
**26607 Aurich (DE)**

(74) Vertreter: **Eisenführ, Speiser & Partner**
**Patentanwälte Rechtsanwälte**
**Postfach 10 60 78**
**28060 Bremen (DE)**

(56) Entgegenhaltungen:

| | |
|---|---|
| WO-A-94/03970 | DE-A- 4 218 298 |
| DE-A- 19 729 034 | DE-C- 19 748 479 |
| JP-A- 9 285 191 | JP-A- 10 215 599 |
| US-A- 5 225 712 | |

**Beschreibung**

Langsam drehende elektrische Maschinen, beispielsweise Ringgeneratoren, wie sie in den Windenergieanlagen der Firma Enercon der Typen E-33, E-40, E-12 und E-66 eingesetzt werden - benötigen sehr viel Erregerleistung. Die erforderliche Erregerleistung steigt hierbei mit der Anzahl der Pole an, mit steigendem Luftspalt und mit Höhe der Blindleistung.

Ringgeneratoren der vorgenannten Art haben beispielsweise 72 oder 84 Pole. Der Wirkungsgrad von direktangetriebenen Generatoren für die Anwendung im Bereich der Windenergie sollte möglichst hoch sein, da diese möglichst 24 Stunden am Tag in Betrieb sind.

Langsam laufende Ringgeneratoren für Windenergieanlagen, wie z.B. die vom Typ E-66 der Firma Enercon, arbeiten am Drehzahlbereich von 10 bis 22 U/min. Ein solcher Ringgenerator ist z.B. mit 72 Polen (36 Polpaaren) gebaut und erzeugt damit eine Frequenz von 6 bis 13,2 Hz.

Ein solcher Ringgenerator besteht aus einem Läufer, durch deren Wicklungen die Erregerleistung aufgebaut wird und einem den Läufer umgebenden Stator. Die Kompensation der Blindleistung oder eine Überkompensation des Stators mit Kondensatoren ist hierfür sehr aufwendig, da die Frequenz - wie vorbeschrieben - sehr niedrig ist.

Der Kondensatorstrom rechnet sich im allgemeinen nach der Formel

$$i_c = C \cdot \frac{du}{dt}$$

Füt-sinusförmige Spannungen (wie bei bekannten Generatoren) ergibt sich hierbei ein Kondensatorstrom von

$$i_c = U \cdot 2 \cdot \pi \cdot f \cdot C$$

Der Kondensatorstrom wird also von der Spannung, der Kapazität der Kondensatoren und der anliegenden Frequenz bestimmt.

Bei einer Generatorfrequenz von z.B. 6 bis 13,2 Hz stellt sich dabei leider nur ein kleiner Kondensatorstrom gegenüber einer konventionellen Frequenz von 50 oder 60 Hz ein. Dieser sinusförmige Kondensatorstrom hat zwar eine Phasenverschiebung von 90° zum Wirkstrom, fließt aber jeweils über einen Bereich von 180° und verursacht dabei erhöhte Kupferverluste in der Statorabwicklung.

Aus DE 42 18 298 ist ein permanenterregtes Generatorsystem bekannt, wobei ein Synchrongenerator ein rotierendes Magnetfeld aufweist, der über einen Spannungsdetektor zum Erfassen der Ausgangsspannung des permanenterregten Synchrongenerators und einen Komparator zum Vergleichen der mittels des Spannungsdetektors erfassten Spannung mit einer mittels einer Spannungs-Einstelleinrichtung einstellbaren Referenzspannung regelbar ist.

Aus US-A 5,773,964 ist eine Regelung einer Autolichtmaschine bekannt.

Aus der eigenen DE 197 29 034 A1 ist ein langsam drehender Synchrongenerator für eine Windenergieanlage bekannt, mit einem Läufer, einem den Läufer umgebenden Stator, wobei der Stator wenigstens eine Drehstromwicklung aufweist und wobei die im Stator induzierten Spannungen im Spannungszeitdiagramm im Wesentlichen trapezförmig ausgebildet sind.

Aus dem Artikel Kundu P; Tandon A K: "Capacitor self-excited doublearmature synchronous generator for enhanced power output", proceedings of IEEE Tencon '98. IEEE Region 10 International Conference on Global Connectivity in Energy, Computer, Communication and Control, New York, USA, 17. Dezember 1998, Band 2, Seiten 391-397, XP-000878343 ist ein Generator bekannt, wobei der Generator einen Rotor und einen den Rotor umgebenden Stator und der Stator wenigstens eine Drehstromwicklung aufweist, welcher ein kapazitärer Strom eingeprägt wird.

Aus dem Artikel Mohamadein A L; Yousef H A; Dessouky Y G: "Seriesconnected self-excited synchronous generator: Steady state and transient behaviours", IEEE Trans. on Energy Conversion, IEEE Inc., New York, USA, Dezember 1999, Band 14, Nr. 4, Seiten 1108-1114, XP-000931931 ist selbsterregter Synchrongenerator bekannt, bei dem Stator- und Rotorwicklungen über Erregerkondensatoren in Serie geschaltet sind.

Die Aufgabe der vorliegenden Erfindung besteht darin, den Wirkungsgrad von direkt angetriebenen Generatoren der vorbeschriebenen Art zu verbessern und die vorbeschriebenen Nachteile zu vermeiden.

Zur Lösung der gestellten Aufgabe wird erfindungsgemäß ein langsam drehender Synchrongenerator mit den Merkmalen nach Anspruch 1 vorgeschlagen. Vorteilhafte Weiterbildungen sind in den Unteransprüchen beschrieben.

Die Erfindung beruht auf dem technologischen Ansatz, dass ein Teil der Erregerleistung des Generators - nicht wie bisher - nur vom Läufer (bzw. dessen Wicklung), sondern auch vom Generator bzw. dessen Drehstromwicklung aufgebracht wird.

Bevorzugt wird der Stator hierbei mit einem kapazitiven Strom erregt.

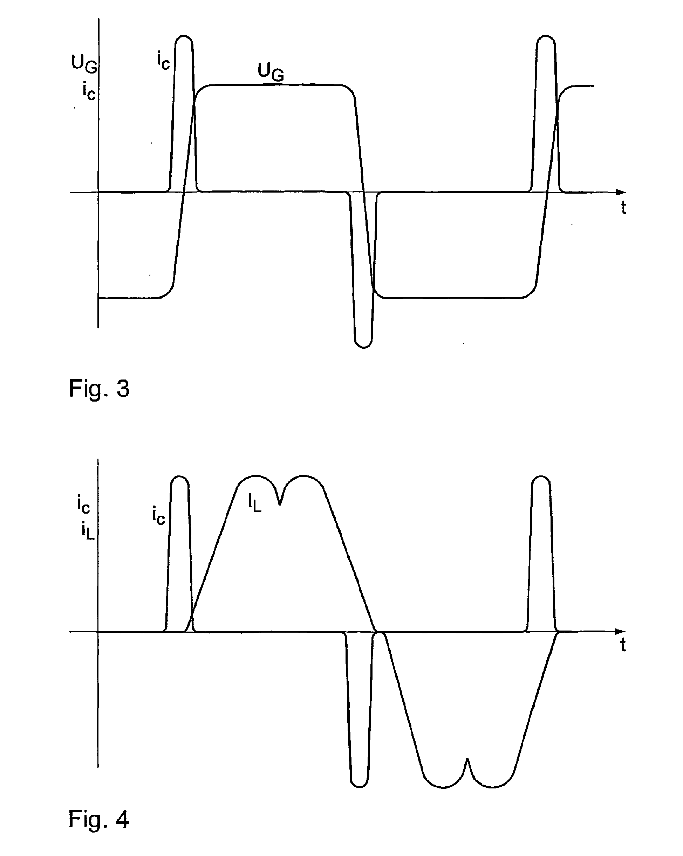

Die im Stator induzierte Spannung ist hierbei nicht in Sinusform ausgebildet, sondern nach Art eines Trapezes (Fig. 3). Der kapazitive Kondensatorstrom fließt dann bei der trapezförmigen Spannung nur während der positiven oder der negativen Flanke der Spannung gemäß der Formel

$$i_c = C \cdot \frac{du}{dt}$$

Die Stromimpulse, die dabei entstehen, haben eine Frequenz von ca. 100 bis 180, vorzugsweise 130 Hz. Damit ergibt sich eine Stromamplitude, die ca. um den Faktor 10 höher ist, als bei einer sinusförmigen Spannung.

Ein weiterer gravierender Vorteil der erfindungsgemäßen Generators ist es auch, dass der kapazitive Strom zu Beginn der gesamten Halbschwingung fließt. Dieses bedeutet, dass der kapazitive Strom zu 100 % einem Erregerstrom entspricht, der damit entsprechend dem Läufer reduziert werden kann. Ferner belastet dieser Strom die Statorwicklung nur dann, wenn noch kein großer Laststrom die Wicklung belastet (Fig. 4).

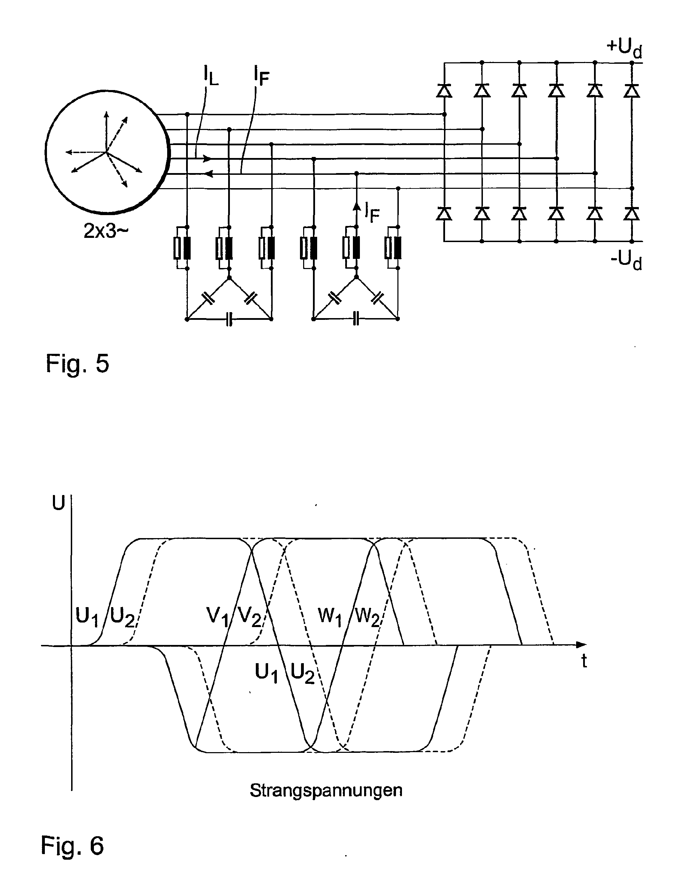

Zweckmäßigerweise wird vorgeschlagen, den Generatorstator mit (wenigstens) zwei Drehstromwicklungen, die wiederum jeweils aus einer Dreiphasenwicklung bestehen, auszubilden. Dabei sind die Drehstromwicklungen um einen Phasenwinkel von 30° versetzt (Fig. 5).

Bei dieser Anordnung startet nach jeweils 30° die nächste Phase mit einer neuen Schwingung. Fig. 6 stellt diesen Zusammenhang über 360° dar.

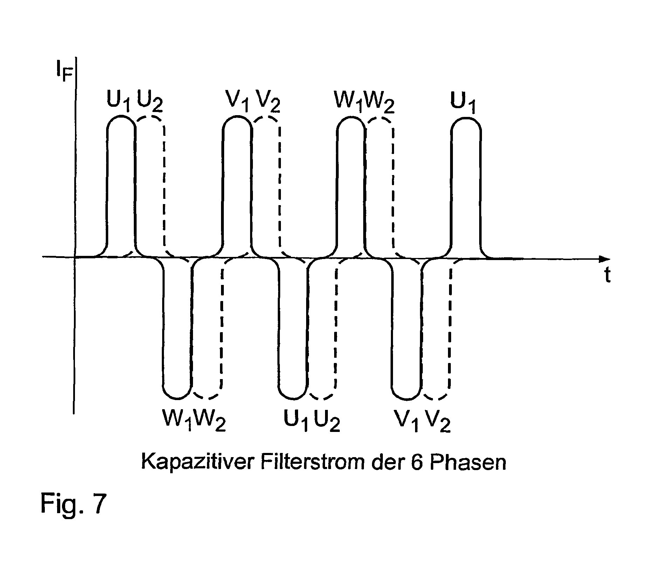

Fig. 7 zeigt über die Zeitachse die kapazitiven Erregerströme im Stator von den zwei Drehstromsystemen. Man erkennt, dass alle 30° elektrisch ein neuer Stromimpuls von den Kondensatoren (siehe Fig. 5) geliefert wird. Dieses Filter ist so ausgelegt, dass es die kapazitiven Stromspitzen für den Generatorstator, außerdem die benötigten Ströme durch Überschwingungen, die der Gleichrichter benötigt, liefert.

Die Vorteile der erfindungsgemäßen Lösung können auch durch Vergleiche mit den bisherigen Generatoren, bei denen die Erregerleistung allein durch den Läufer erzeugt wird, aufgezeigt werden. Bei der bisherigen Lösung der Erzeugung der Erregerleistung durch den Läufer allein ergeben sich ca. 20 % Induktionsverluste. Dieses bedeutet gemäß der Formel P = i² · R (100 % + 20 % = 1,2) Verluste von 1,2². Diesen Verlustanteil kann man bei bisherigen Generatoren grundsätzlich nicht vermeiden, weil die Polschuhe keine unendliche Entfernung voneinander haben können und der Verlust von 20 % durch die nebeneinander stehenden Polschuhe erzeugt werden, in dem magnetischer Verlust von einem Polschuh direkt in den anderen über den Luftspalt zwischen den Polschuhen geht.

Wird nun jedoch Erregerleistung auch durch den Stator erzeugt, so treten solche Verluste bei diesem erzeugten Teil der Erregerleistung nicht mehr auf. Das bedeutet auch, dass der durch den Stator erzeugte Teil der Erregerleistung 100 % zur Leistung beiträgt. Insgesamt kann man also die Erregerleistung des Läufers etwas zurücknehmen, so dass der Verlustanteil schon durch die Statorerregerleistung wegen dessen Verlustfreiheit zurückgeht. Durch die Rücknahme der Erregerleistung aus dem Läufer wird jedoch auch die Streuinduktivität verringert, so dass der 20 %ige Verlustanteil, der bislang entstand, noch einmal verringer wird.

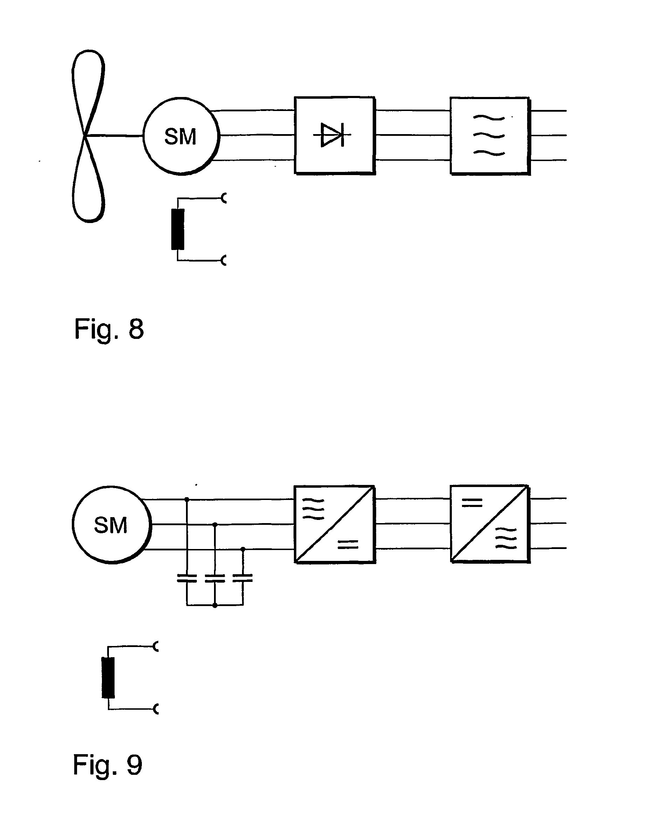

Fig. 8 zeigt ein Blockschaltbild einer Windenergieanlage mit einer Synchronmaschine und nachgeschalteten Wechselrichter.

Fig. 9 zeigt eine Blockschaltskizze einer erfindungsgemäßen Windenergieanlage, bei welcher ein Kapazitätsnetzwerk in Sternpunktschaltung an den Wicklungen eines einfachen Drehstromsystems angeschlossen ist.

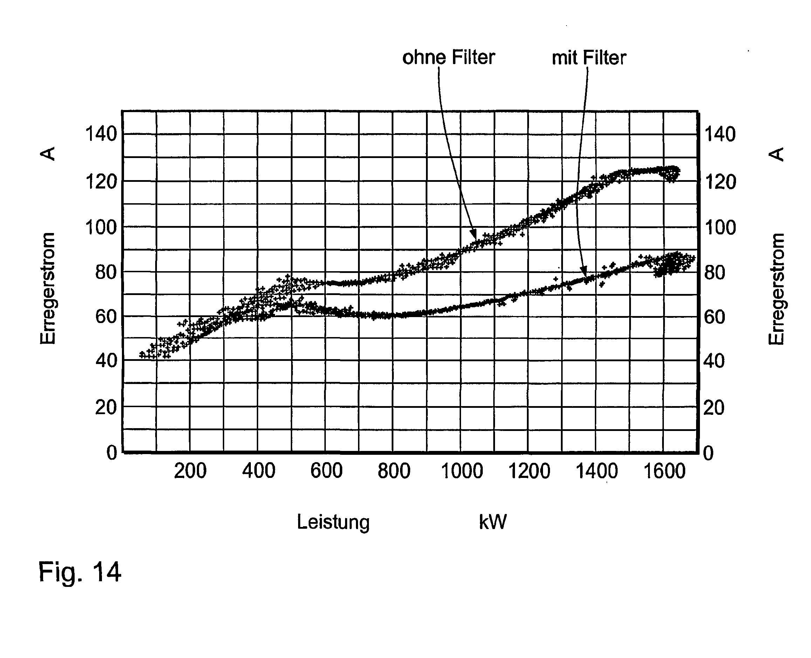

Ein weiterer Vorteil der erfindungsgemäßen Lösung ist auch Fig. 14 zu entnehmen. Fig. 14 zeigt den erforderlichen Erregerstrom über der jeweiligen abgegebenen Leistung des Generators. Die obere Kurve zeigt den Erregerbedarf ohne Filter. Die untere Kurve mit ca. 20 % reduziertem Erregerstrom zeigt den Betrieb mit der erfindungsgemäßen Lösung.

Eine Reduzierung des Erregerstroms um ca. 20 % erzeugt eine um ca. 36 % kleinere Erregerleistung im Polrad. Dieses stellt eine große Verminderung der Verlustleistung des Polrades dar. Damit ist es möglich, die Generatorleistung zu erhöhen. Denn bei Generatoren mit einer Nenndrehzahl von ca. 20 U/min. bestimmt hauptsächlich die Drehzahl und damit das d$\phi$/dt oder die Induktion B im Luftspalt die Baugröße. Damit kann die Nennleistung bisheriger Generatoren, wie sie bei Windenergieanlagen vom Typ E-66 der Firma Enercon (Nennleistung 1,5 MW) auf 1.800 kW erhöht werden.

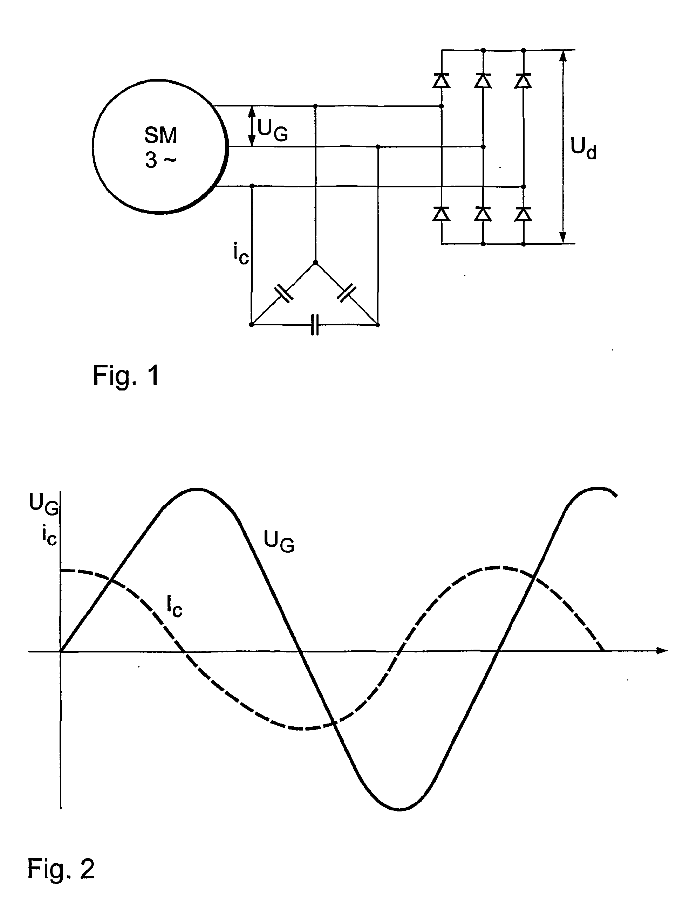

Fig. 1 zeigt einen Generator (Synchronmaschine SM) mit einem Dreiphasen-Drehstromsystem an dem ein Gleichrichter angeschlossen ist. In dem Dreiphasenleitersystem ist ein Kapazitätsnetzwerk, bestehend aus drei Kapazitäten in Dreiecksschaltung angeschlossen. Zwischen den einzelnen Leitern der Drehstromwicklung liegt die Spannung $U_G$ an. Bei einer sinusförmigen Leiterspannung wird ein verschobener sinusförmiger Strom $i_C$ erzeugt, wie dieses in Fig. 2 dargestellt ist.

Fig. 3 zeigt den Kondensatorstrom bei einer trapezförmigen Spannung. Fig. 4 zeigt den Verlauf des Kondensatorstroms $i_C$ sowie den Verlauf des Laststroms $i_L$ im Stromzeitdiagramm.

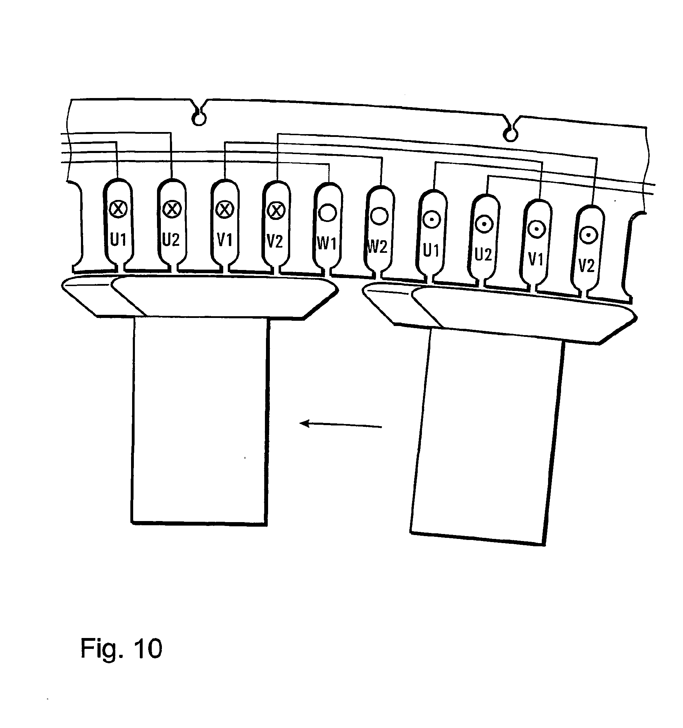

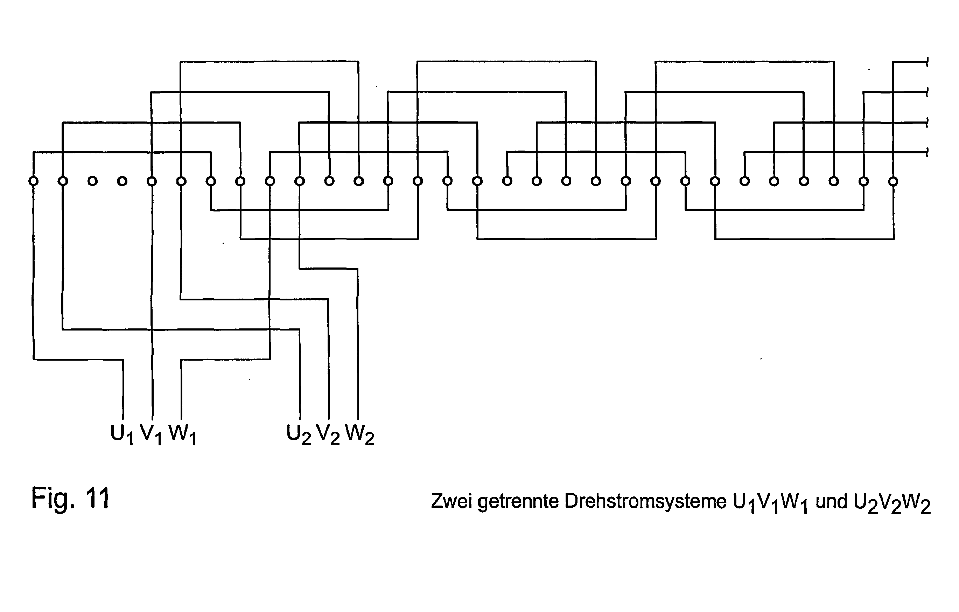

Fig. 5 zeigt den Aufbau eines Synchrongenerators (Ringgenerator), bestehend aus wenigstens zwei Drehstromsystemen, wobei jedes einzelne Drehstromsystem über drei Drehstromwicklungen verfügt. Beide Drehstromsysteme sind um ca. 30° gegeneinander verschoben. Dieses wird auch anhand der Figuren 10 und 11 gezeigt. Fig. 10 zeigt im Querschnitt einen Teilauszug eines erfindungsgemäßen langsam drehenden Synchrongenerators. Hierbei rotiert der Läufer innerhalb des Stators.

Ferner sind - siehe auch Fig. 11 - zwei unabhängige Drehstromwicklungen $U_1$, $V_1$, $W_1$ sowie $U_2$, $V_2$, $W_2$ im Stator ausgebildet. Die Leistung des Generators wird somit auf beide Drehstromwicklungen (Drehstromsysteme) aufgeteilt, sodass jedes Drehstromsystem nur 50 % der Nennleistung zu übernehmen hat. Beide Drehstromsysteme sind um einen elektrischen Winkel von 30° verschoben und somit elektrisch und mechanisch (räumlich) voneinander isoliert. Damit ist auch die Reaktanz $X_D$ in etwa verdoppelt und somit der Kurzschlussstrom halbiert. Das hat den Vorteil, dass bei einem evtl. Kurzschluss in einem Drehstromsystem nur die halbe Kurzschlussleistung auftreten kann. Damit ist eine Reduzierung des maximalen Kurzschlussmomentes (Kurzschluss von zwei Phasen, z. B. zwischen $U_1$ und $V_1$) um 50 % zu einer Systemanordnung aus dem Stand der Technik möglich.

Fig. 11 zeigt in einer einfachen Übersicht die Anordnung der einzelnen Phasen der unterschiedlichen Drehstromsysteme über einen größeren Statorbereich.

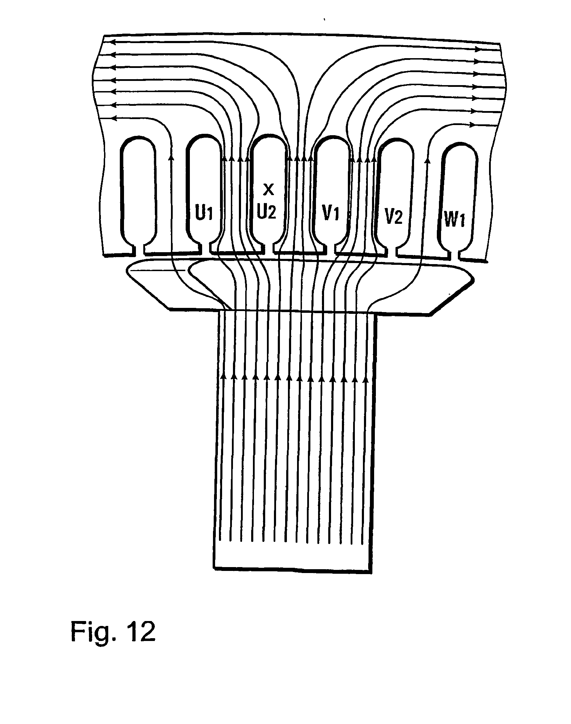

Fig. 12 zeigt die Darstellung des magnetischen Flusses im erfindungsgemäßen Generator (Läufer-> Stator). Hierbei verläuft der magnetische Fluss auf direktem Wege vom Polkopf des Läufers zum Stator gleichmäßig zwischen den Nuten.

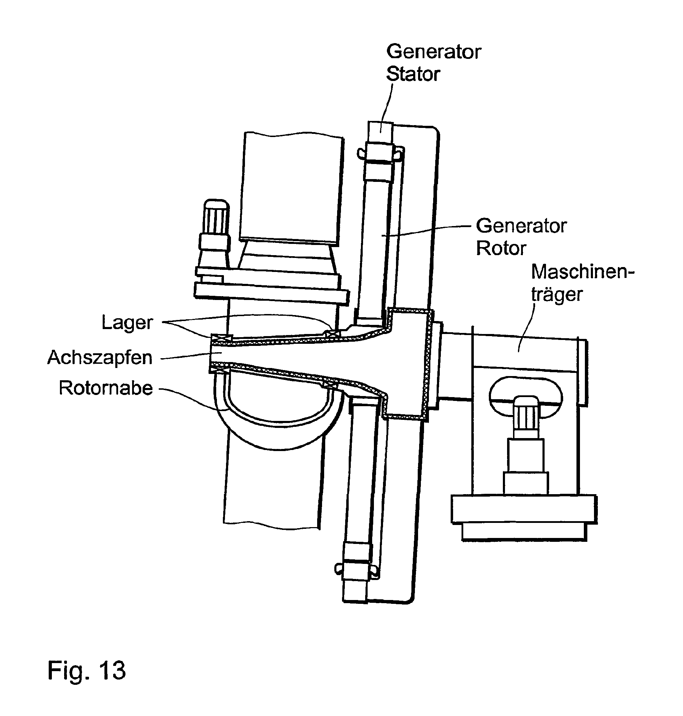

Fig. 13 zeigt den Querschnitt einer erfindungsgemäßen Windenergieanlagen-Gondel mit einem erfindungsgemäßen Synchrongenerator. Hierbei ist an den Rotor der Windenergieanlage der Läufer des Generators angeflanscht und Rotor und Läufer sind auf einem Achszapfen gelagert. Der Rotor ist mithin ohne Getriebe und ohne Welle direkt mit dem Generatorläufer des Synchrongenerators verbunden. Der Generatorläufer liegt innerhalb des Generatorstators, welcher direkt am Achszapfen angeflanscht ist. Der Achszapfen, wie der gesamte auf ihm gelagerte Antriebsstrang nebst dem Generator, wird von einem Maschinenträger gehalten.

Durch die Ausbildung von zwei Drehstromwicklungen des Generators sind Mittel ausgebildet, die das Kurzschlussdrehmoment, welches im Falle eines Kurzschlusses an einer Statorwicklung auftritt, stets auf das maximal Vierfache des Nenndrehmoments, vorzugsweise auf das Zweifache des Nenndrehmoments begrenzen. Das Kurzschlussdrehmoment kann auch stets kleiner sein als das Zweifache des Nenndrehmoments. Es ist auch möglich, den Läufer ohne einen Dämpferkäfig bzw. ohne eine Dämpferwicklung auszubilden.

**Patentansprüche**

1. Langsam drehender Synchrongenerator (SM), insbesondere Ringgenerator, für eine Windenergieanlage, mit:

    - einem Läufer,
    - einem den Läufer umgebenden Stator, wobei der Stator wenigstens eine Drehstromwicklung ($U_1$, $V_1$, $W_1$; $U_2$, $V_2$, $W_2$) aufweist, und die im Stator induzierten Spannungen ($U_G$) im Spannungszeitdiagramm im Wesentlichen trapezförmig ausgebildet sind,

**gekennzeichnet durch**

    - eine Kompensationseinheit, bestehend aus Kondensatoren, Induktivitäten und Dämpfungswiderständen, die mit dem Stator verbunden sind zum Einprägen eines kapazitiven Stromes ($i_c$) in den Stator und/oder zum Erzeugen eines Teils der Erregerleistung des Generators (SM) **durch** einen kapazitiven Strom ($i_c$),

wobei die Kompensationseinheit einem dem Generator (SM) nachgeschalteten Gleichrichter eine Oberschwingungsleistung bereitstellt.

2. Synchrongenerator nach Anspruch 1, **dadurch gekennzeichnet, dass** der Synchrongenerator (SM) ein Mehrphasen-Generator ist und dass zwischen den einzelnen Phasenleitern der Statorwicklung Mittel zur Reduzierung des Erregerstroms ausgebildet sind.

3. Synchrongenerator nach Anspruch 2, **dadurch gekennzeichnet, dass** die Mittel zur Reduzierung des Erregerstroms durch Kondensatoren und/oder Filterschaltungen zur Bereitstellung eines Statorstromes ausgebildet sind.

4. Synchrongenerator nach einem der vorhergehenden Ansprüche, **dadurch gekennzeichnet, dass** die Statorwicklung aus wenigstens aus zwei Drehstromsystemen ($U_1$, $V_1$, $W_1$; $U_2$, $V_2$, $W_2$) besteht, die jeweils um 30° gegeneinander verschoben sind.

5. Synchrongenerator nach Anspruch 1, **dadurch gekennzeichnet, dass** die Kompensationseinheit eine sechste Stromoberschwingung für den Stator liefert.

6. Windenergieanlage mit einem Synchrongenerator (SM) nach einem der vorhergehenden Ansprüche.

**Claims**

1. Slowly rotating synchronous generator (SM), especially a ring generator, for a wind power installation, comprising:

    - a rotor,
    - a stator surrounding the rotor, the stator having at least one three-phase current winding ($U_1$, $V_1$, $W_1$; $U_2$, $V_2$, $W_2$) and the voltages ($U_G$) induced in the stator being of a substantially trapezoidal configuration in the voltage-time diagram,

**characterised by**

- a compensation unit, consisting of capacitors, inductors and damping resistors which are connected to the stator for impressing a capacitive current ($i_c$) into the stator and/or for generating part of the exciter power of the generator (SM) by a capacitive current ($i_c$),

the compensation unit providing a rectifier connected downstream of the generator (SM) with a harmonic power.

2. Synchronous generator according to claim 1, **characterised in that** the synchronous generator (SM) is a multi-phase generator and that means for reducing the exciter current are formed between the individual phase conductors of the stator winding.

3. Synchronous generator according to claim 2, **characterised in that** the means for reducing the exciter current are formed by capacitors and/or filter circuits for providing a stator current.

4. Synchronous generator according to any one of the preceding claims, **characterised in that** the stator winding consists of at least two three-phase current systems ($U_1$, $V_1$, $W_1$; $U_2$, $V_2$, $W_2$) which are each offset from one another by 30°.

5. Synchronous generator according to claim 1, **characterised in that** the compensation unit supplies a sixth current harmonic for the stator.

6. Wind power installation having a synchronous generator (SM) according to any one of the preceding claims.

**Revendications**

1. Générateur synchrone (SM) à rotation lente, en particulier générateur annulaire, destiné à une installation d'énergie éolienne, présentant :

- un rotor,
- un stator entourant le rotor, le stator présentant au moins un enroulement à courant triphasé ($U_1$, $V_1$, $W_1$ ; $U_2$, $V_2$, $W_2$), et les tensions ($U_G$) induites dans le stator étant essentiellement de forme trapézoïdale dans le diagramme temps-tension,

**caractérisé par**

- une unité de compensation se composant de condensateurs, d'inductances et de résistances d'amortissement qui sont reliées au stator afin d'appliquer un courant capacitif ($i_c$) dans le stator et/ou afin de générer une partie de la puissance d'excitation du générateur (SM) moyennant un courant capacitif ($i_c$),

l'unité de compensation mettant à disposition d'un redresseur monté en aval du générateur (SM) une puissance de suroscillation.

2. Générateur synchrone selon la revendication 1, **caractérisé en ce que** le générateur synchrone (SM) est un générateur polyphasé et **en ce qu'**entre les fils de phase individuels de l'enroulement du stator, des moyens sont formés afin de réduire le courant excitateur.

3. Générateur synchrone selon la revendication 2, **caractérisé en ce que** les moyens destinés à la réduction du courant excitateur par des condensateurs et/ou des circuits de filtrage sont conçus pour mettre à disposition un courant de stator.

4. Générateur synchrone selon l'une quelconque des revendications précédentes, **caractérisé en ce que** l'enroulement de stator est composé d'au moins deux systèmes triphasés (($U_1$, $V_1$, $W_1$; $U_2$, $V_2$, $W_2$), qui sont décalés l'un par rapport à l'autre respectivement de 30°.

5. Générateur synchrone selon la revendication 1, **caractérisé en ce que** l'unité de compensation délivre une sixième suroscillation de courant pour le stator.

6. Installation d'énergie éolienne avec un générateur synchrone (SM) selon l'une quelconque des revendications précédentes.

Fig. 1

Fig. 2

Fig. 3

Fig. 4

Fig. 5

Strangspannungen

Fig. 6

Kapazitiver Filterstrom der 6 Phasen

Fig. 7

**Fig. 8**

**Fig. 9**

Fig. 10

$U_2 V_2 W_2$

$U_2 V_2 W_2$

$U_1 V_1 W_1$

$U_1 V_1 W_1$

Zwei getrennte Drehstromsysteme $U_1V_1W_1$ und $U_2V_2W_2$

Fig. 11

Fig. 12

Generator
Stator

Generator
Rotor

Maschinenträger

Lager

Achszapfen

Rotornabe

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4218298
- US 5773964 A
- DE 19729034 A1

**In der Beschreibung aufgeführte Nicht-Patentliteratur**

- **KUNDU P ; TANDON A K.** Capacitor self-excited doublearmature synchronous generator for enhanced power output. *International Conference on Global Connectivity in Energy, Computer, Communication and Control,* 17. Dezember 1998, vol. 2, 391-397

- Seriesconnected self-excited synchronous generator: Steady state and transient behaviours. **MOHAMADEIN A L ; YOUSEF H A ; DESSOUKY Y G.** IEEE Trans. on Energy Conversion. IEEE Inc, 1999, vol. 14, 1108-1114